(19) **Europäisches Patentamt / European Patent Office / Office européen des brevets**

(11) **EP 4 492 187 A1**

(12) **EUROPEAN PATENT APPLICATION**
published in accordance with Art. 153(4) EPC

(43) Date of publication:
**15.01.2025 Bulletin 2025/03**

(21) Application number: **23798874.6**

(22) Date of filing: **16.10.2023**

(51) International Patent Classification (IPC):
***G05D 23/20*** (2006.01)

(52) Cooperative Patent Classification (CPC):
**Y02A 30/30**

(86) International application number:
**PCT/CN2023/124752**

(87) International publication number:
**WO 2024/244257 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2023 CN 202310627602**

(71) Applicant: **CRSC Research & Design Institute Group Co., Ltd.**
**Beijing 100070 (CN)**

(72) Inventors:
• **WANG, Pengyue**
  **Beijing 100070 (CN)**
• **LI, Yang**
  **Beijing 100070 (CN)**
• **YANG, Jin**
  **Beijing 100070 (CN)**
• **GUO, Haiwen**
  **Beijing 100070 (CN)**
• **ZHANG, Tianfu**
  **Beijing 100070 (CN)**
• **WANG, Suier**
  **Beijing 100070 (CN)**
• **LI, Zhongming**
  **Beijing 100070 (CN)**
• **LIU, Jingwei**
  **Beijing 100070 (CN)**
• **SUI, Zheng**
  **Beijing 100070 (CN)**
• **ZHANG, Xiaoyu**
  **Beijing 100070 (CN)**

(74) Representative: **Haseltine Lake Kempner LLP**
**Cheapside House**
**138 Cheapside**
**London EC2V 6BJ (GB)**

(54) **TURNOUT SNOW MELTING SYSTEM AND CONTROL METHOD THEREFOR**

(57) The invention discloses a snow melting system for railroad switches and a control method thereof. The method comprises: acquiring environment information through a sensor, determining whether to perform a heating action according to the environment information, the environment information including temperature and humidity information and snowfall information; if determining to perform the heating action, outputting a preset control signal to an inverter power supply, to cause the inverter power supply to generate a high-frequency alternating current on an induction heating coil which heats a steel rail; determining a magnitude relation between a distance between the induction heating coil and the steel rail and a preset distance according to a collected output current of the inverter power supply, and controlling an output signal to the inverter power supply according to the magnitude relation to control a heating state; wherein the heating state include continuing heating and stopping heating. By the controller outputting the control signal to the inverter power supply to cause the inverter power supply to generate a high-frequency alternating current, to cause the induction heating coil to generate an alternating magnetic field, and heating the steel rail using eddy current generated by the alternating magnetic field, the advantages of high heating efficiency, rapid temperature increase, and low power consumption are achieved.

EP 4 492 187 A1

FIG.8

## Description

### FIELD OF THE DISCLOSURE

The present invention relates to the technical field of ice and snow melting heating, and in particular, to a snow melting system for railroad switches and a control method thereof.

### BACKGROUND

The railroad switch has a significant position in the steel railway system and has an important role in changing the steel rail of the train. When the snow and ice cubes are at the railroad switch, if they are not removed in timely and thoroughly, a tongue steel rail cannot be snugly adhered to a stock steel rail, so that the railroad switch cannot be normally switched, which directly affects the transportation efficiency. Installing a snow melting apparatus for railroad switches can effectively clean up the snow on critical parts of the railroad switches.

The conventional electric heating snow melting system for railroad switches mainly heats the steel rail through electric heating bars mounted on the steel rail. When operating, the heating bars are energized to convert the electric energy into heat energy, which is transferred to the steel rail by increasing the surface temperature. The heat energy enters the switch operating area by convection only when the stock steel rail is heated to a higher temperature. This heating method by heat conduction is low in efficiency, slow in temperature increase, and large in energy consumption.

### SUMMARY

The present invention provides a snow melting system for railroad switches and a control method thereof to achieve high heating efficiency, fast temperature increase, and low energy consumption.

According to an aspect of the present invention, a control method for a snow melting system for railroad switches is provided, the control method comprising:

acquiring environment information through a sensor, determining whether to perform a heating action according to the environment information, the environment information including temperature and humidity information and snowfall information;

if so, outputting a preset control signal to an inverter power supply to cause the inverter power supply to generate a high-frequency alternating current on an induction heating coil, which heats a steel rail;

determining a magnitude relation between a distance between the induction heating coil and the steel rail and the preset distance according to a collected output current of the inverter power supply, and controlling an output signal to the inverter power supply according to the magnitude relation to control a heating state, wherein the heating state includes continuing heating and stopping heating.

Optionally, the determining the magnitude relation between the distance between the induction heating coil and the steel rail and the preset distance according to the collected output current of the inverter power supply, and controlling the output signal to the inverter power supply according to the magnitude relation to control the heating state comprises:

collecting the output current of the inverter power supply;

if the output current is less than or equal to the preset current, determining that the distance between the induction heating coil and the steel rail is less than or equal to the preset distance, and continuing outputting the preset control signal to the inverter power supply;

if the output current is greater than the preset current, determining that the distance between the induction heating coil and the steel rail is greater than the preset distance, and stopping outputting the preset control signal to the inverter power supply.

Optionally, the inverter power supply comprises a half-bridge resonance unit, which outputs the preset control signal to the inverter power supply to cause the inverter power supply to generate the high-frequency alternating current on the induction heating coil, wherein the induction heating coil heating the steel rail comprises: outputting a first pulse width modulation signal of a preset frequency to the half-bridge resonance unit.

Optionally, the snow melting system for railroad switches further comprises a rectification module, after determining that the distance between the induction heating coil and the steel rail is less than or equal to the preset distance if the output current is less than or equal to the preset current, and continuing outputting the preset control signal to the inverter power supply, further comprising:

monitoring a phase of an output voltage-output current of the half-bridge resonance unit;

collecting magnitudes of an input voltage and an input current of the rectification module and calculating input power when a phase difference of the output voltage-output current is greater than a preset threshold; and

adjusting a frequency of the first pulse width modulation signal according to a magnitude relation between the input power and preset power to cause the input power within a set range of the preset power.

Optionally, the half-bridge resonance unit comprises an insulated gate bipolar transistor and a thermistor; before outputting the first pulse width modulation signal of the preset frequency to the half-bridge resonance unit, further comprising:

judging whether heating conditions are met, and if so, continuing performing the step of outputting the first pulse width modulation signal of the preset frequency to the half-bridge resonance unit;
wherein the heating conditions include that an input voltage of the rectification module is normal, a temperature of the insulated gate bipolar transistor is normal, the distance between the induction heating coil and the steel rail is less than the preset distance, and the snow melting system for railroad switches is not in the heating state.

Optionally, the judging whether the heating conditions are met comprises:

collecting the input voltage of the rectification module, measuring value of a resistance of the thermistor in the half-bridge resonance unit, judging whether the input voltage is within a preset range of a voltage, judging whether the value of the resistance of the thermistor is within a preset range of the value of the resistance, stopping outputting the first pulse width modulation signal of the preset frequency if abnormal, and returning to perform the step of collecting the input voltage of the rectification module;
if normal, judging whether the snow melting system for railroad switches is in the heating state, if no, outputting a second pulse width modulation signal to the half-bridge resonance unit, detecting a magnitude of the output current of the half-bridge resonance unit at this time, judging whether the distance between the induction heating coil and the steel rail is less than or equal to the preset distance according to the magnitude of the output current, if the distance between the induction heating coil and the steel rail is less than or equal to the preset distance, continuing performing the step of outputting the first pulse width modulation signal of the preset frequency to the half-bridge resonance unit, and returning to perform the step of collecting the input voltage of the rectification module;
if the distance between the induction heating coil and the steel rail is greater than the preset distance, stopping outputting the first pulse width modulation signal of the preset frequency, and returning to perform the step of collecting the input voltage of the rectification module; and
if the snow melting system for railroad switches is in the heating state, continuing performing the step of collecting the output current of the inverter power supply.

Optionally, adjusting the frequency of the first pulse width modulation signal according to the magnitude relation between the input power and the preset power to cause the input power within the set range of the preset power comprising:

decreasing the frequency of the first pulse width modulation signal if the input power is less than a lower limit of the set range of the preset power;
not adjusting the frequency of the first pulse width modulation signal if the input power is within the set range of the preset power; and
increasing the frequency of the first pulse width modulation signal if the input power is greater than an upper limit of the set range of the preset power.

Optionally, after determining the magnitude relation between the distance between the induction heating coil and the steel rail and the preset distance according to the collected output current of the inverter power supply, and controlling the output signal to the inverter power supply according to the magnitude relation, to control the heating state, the method further comprises: acquiring a temperature of the steel rail through a sensor, and when the temperature of the steel rail is greater than a set temperature threshold, stopping the heating action.

According to another aspect of the present invention, a snow melting system for railroad switches is provided, comprising: a controller, an inverter power supply, an induction heating coil, and a sensor;

the controller connected with the inverter power supply and configured to output a preset control signal to the inverter power supply, and determine a magnitude relation between a distance between the induction heating coil and the steel rail and a preset distance according to a collected output current of the inverter power supply, and control an output signal to the inverter power supply according to the magnitude relation to control a heating state of the induction heating coil;
the inverter power supply connected with the induction heating coil and configured to generate a high-frequency alternating current on the induction heating coil according to the preset control signal output from the controller, to cause the induction heating coil to heat the steel rail;
the induction heating coil disposed on the steel rail and configured to heat the steel rail according to an output current provided by the inverter power supply; and
the sensor configured to collect environment information and transmit it to the controller.

Optionally, the inverter power supply comprises a half-bridge resonance unit, wherein the half-bridge resonance unit is configured to generate a high-frequency alternating current on the induction heating coil according to a first pulse width modulation signal of a preset frequency output from the controller;

wherein the half-bridge resonance unit comprises:

an insulated gate bipolar transistor and a thermistor;

wherein the insulated gate bipolar transistor is configured to control on and off of the half-bridge resonance unit according to the first pulse width modulation signal of the preset frequency output from the controller; and

wherein the thermistor is configured to monitor a temperature of the insulated gate bipolar transistor.

Optionally, the system further comprises an isolation transformer, and a rectification module;

wherein the isolation transformer is configured to power the rectification module; and

wherein the rectification module is configured to rectify an alternating current provided by the isolation transformer into a direct current.

In the technical solution of an embodiment of the present invention, environment information is acquired through a sensor, whether a steel rail needs heating for melting snow is judged in combination with the environment information, when determining that the rail needs heating for melting snow, a controller outputs a preset control signal to an inverter power supply to cause the inverter power supply to generate a corresponding high-frequency alternating current according to a pulse wave signal of a preset frequency, and output the corresponding high-frequency alternating current to an induction heating coil to cause the induction heating coil to generate an alternating magnetic field, and the steel rail is heated by eddy current generated on the steel rail utilizing the alternating magnetic field. The method does not require heat conduction and self-heating of the steel rail, has the advantages of high heating efficiency, rapid temperature increase, low power consumption, and performs automatic control in combination with the environment information, further reducing the power consumption of the system. In addition, by collecting the output current of the inverter power supply to judge the distance between the induction heating coil and the steel rail, the controller controls the heating state according to the magnitude of the output current and the distance between the induction heating coil and the steel rail, thereby preventing damage to the system due to the excessive current, and also preventing heat and power consumption from being wasted due to a longer distance between the induction heating coil and the steel rail, thus improving the reliability and safety of the system, and further reducing the power consumption of the system.

It should be understood that what is described in this section is not intended to identify key or critical features of embodiments of the invention nor is it intended to limit the scope of the invention. Other features of the present invention will become apparent from the following description.

**BRIEF DESCRIPTION OF THE DRAWINGS**

In order to more clearly illustrate the technical solutions in the embodiments of the present invention, the following will simply introduce the accompanying drawings to be used in the description of the embodiments, and it is obvious that the accompanying drawings in the following description are only some embodiments of the present invention. It will be obvious to those skilled in the art that other drawings can be obtained according to these drawings without paying inventive step.

FIG. 1 is a flowchart illustrating a control method for a snow melting system for railroad switches provided according to an embodiment of the present invention;

FIG. 2 is a structural schematic diagram of a snow melting system for railroad switches provided according to an embodiment of the present invention;

FIG. 3 is a flowchart illustrating another control method for a snow melting system for railroad switches provided according to an embodiment of the present invention;

FIG. 4 is a flowchart illustrating yet another control method for a snow melting system for railroad switches provided according to an embodiment of the present invention;

FIG. 5 is a flowchart illustrating yet another control method for a snow melting system for railroad switches provided according to an embodiment of the present invention;

FIG. 6 is a waveform diagram of a first pulse width modulation signal and an output current of a half-bridge resonance unit;

FIG. 7 is a flowchart illustrating yet another control method for a snow melting system for railroad switches provided according to an embodiment of the present invention;

FIG. 8 is a logic diagram illustrating a control method for a snow melting system for railroad switches provided according to an embodiment of the present invention; and

FIG. 9 is a logic diagram illustrating yet another control method for a snow melting system for railroad switches provided according to an embodiment of the present invention.

**DETAILED DESCRIPTION**

In order for those skilled in the art to better understand the solutions of the present invention, the technical solutions of the embodiments of the present invention will be clearly and completely described below in conjunction with the accompanying drawings of the embodiments of the present invention. It is obvious that the described embodiments are only embodiments of a part of the present invention, rather than all of the embodiments. Based on the embodiments in the present invention, all other embodiments obtained by those of ordinary skill in the art without making inventive labor should belong to the scope of protection of the present invention.

It is noted that the terms "first", "second" and the like in the description and claims of the present invention as well as in the drawings described above, are used for distinguishing between similar objects and not necessarily for describing a particular sequential or chronological order. It is to be understood that such use of data may be interchanged under appropriate circumstances such that the embodiments of the invention described herein are capable of being practiced in sequences other than those illustrated or described herein. Furthermore, the terms "including" and "having," and any variations thereof, are intended to cover a non-exclusive inclusion, such that, for example, a process, method, system, article, or apparatus that comprises a list of steps or elements is not necessarily limited to those steps or elements expressly listed but may include other steps or elements not expressly listed or inherent to such process, method, article, or apparatus.

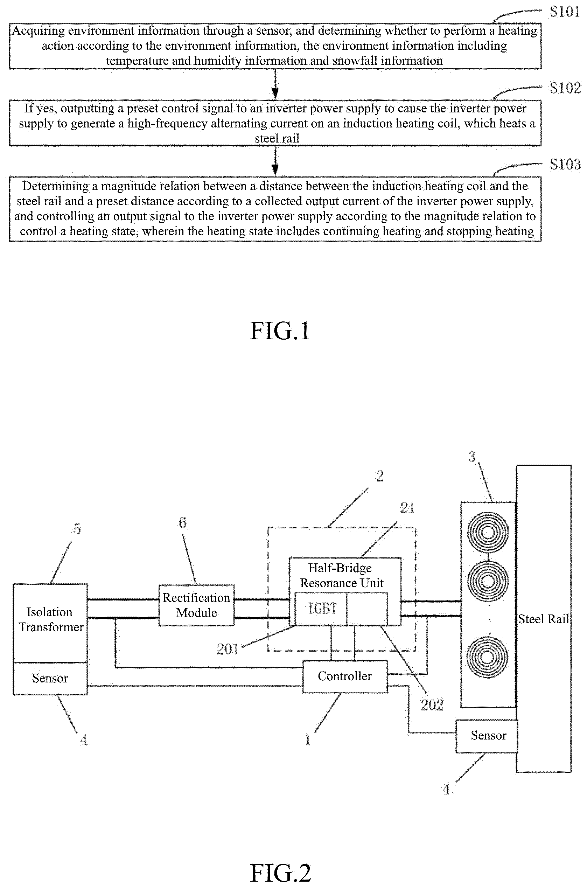

Embodiments of the present invention provide a control method for a snow melting system for railroad switches, which can be performed by the snow melting system for railroad switches, and is suitable for removing snow and ice cubes on steel railway rails. FIG. 1 is a flowchart illustrating a control method for a snow melting system for railroad switches provided according to an embodiment of the present invention, and FIG. 2 is a structural schematic diagram of the snow melting system for railroad switches provided according to an embodiment of the present invention. The snow melting system for railroad switches comprising a controller 1, an inverter power supply 2, an induction heating coil 3 and a sensor 4. As shown in FIG. 1, the control method comprising: S101, acquiring environment information through a sensor, and determining whether to perform a heating action according to the environment information, the environment information including temperature and humidity information and snowfall information.

In particular, the sensors may include a rain and snow monitoring sensor disposed alongside the rail and a temperature and humidity sensor disposed on the rail. The controller may collect the environment information of the sensor at a frequency. Exemplarily, the controller may collect the environment information of the sensor at a 10s interval and determine whether to perform the heating action. When the sensor recognizes snowfall, or the temperature of the steel rail is below 0 °C and the humidity of the steel rail is above a preset humidity threshold, the controller starts performing the heating action.

S102, if yes, a preset control signal is output to the inverter power supply to cause the inverter power supply to generate a high-frequency alternating current on the induction heating coil, which heats the steel rail.

In particular, the preset control signal may be a pulse wave signal. If it is determined to perform the heating action, the controller outputs a pulse wave signal of a preset frequency to the inverter power supply to cause the inverter power supply to generate a corresponding high-frequency alternating current according to the pulse wave signal of the preset frequency and to output the corresponding high-frequency alternating current to the induction heating coil to cause the induction heating coil to generate an alternating magnetic field. The steel rail is heated by eddy currents generated on the steel rail utilizing the alternating magnetic field. This method does not require heat conduction, self-heating of the steel rail, high heating efficiency, rapid heating, and low energy consumption.

S103, a magnitude relation between a distance between the induction heating coil and the steel rail and a preset distance is determined according to the collected output current of the inverter power supply, and an output signal to the inverter power supply is controlled according to the magnitude relation to control a heating state, wherein the heating state includes continuing heating and stopping heating.

Specifically, since the distance between the induction heating coil and the steel rail affects the magnitude of the output current of the inverter power supply, in order to avoid damaging the device by excessive output current, it is necessary that the controller monitors the magnitude of the output current in real time, and determines the magnitude relation between the distance between the induction heating coil and the steel rail and the preset distance according to the collected output current of the inverter power supply, during continuous heating. The preset distance may correspond to a threshold distance at which the induction heating coil is loosed from the steel rail. In this step, the distance between the induction heating coil and the steel rail is determined according to the collected output current of the inverter power supply, and whether the induction heating coil is loosed or not can be judged according to the magnitude relation between the distance between the induction heating coil and the steel rail and the preset distance. The power waste and damage to critical components of the system occur if the system continues operating when the induction heating coil is loosed. In this step, when the induction heating coil is judged to be loosed according to the magnitude relation between the distance between the induction heating coil and the steel rail and the preset distance determined according to the collected output current of the inverter power supply, the output of the preset control signal to the inverter power supply is stopped to stop the heating. By collecting the output current of the inverter power supply to judge the distance between the induction heating coil and the steel rail, the controller controls the heating state according to the magnitude of the output current and the distance between the induction heating coil and the steel rail, thereby preventing damage to the system due to the excessive current, and preventing heat and power consumption from being wasted due to a longer distance between the induction heating coil and the steel rail, thus improving the reliability and safety of the system, and further reducing the power consumption of the system. If it is determined that the distance between the induction heating coil and the steel rail is less than or equal to the preset distance, the preset control signal is continued to be output to the inverter power supply to continue heating.

In the technical solution of this embodiment, environment information is acquired through a sensor, whether a steel rail needs heating for melting snow is judged in combination with the environment information, when determining that the rail needs heating for melting snow, a controller outputs a preset control signal to an inverter power supply to cause the inverter power supply to generate a corresponding high-frequency alternating current according to a pulse wave signal of a preset frequency, and output the corresponding high-frequency alternating current to an induction heating coil to cause the induction heating coil to generate an alternating magnetic field, and the steel rail is heated by eddy current generated on the steel rail utilizing the alternating magnetic field. The method does not require heat conduction and self-heating of the steel rail, has the advantages of high heating efficiency, rapid temperature increase, low power consumption, and performs automatic control in combination with the environment information, further reducing the power consumption of the system. In addition, by collecting the output current of the inverter power supply to judge the distance between the induction heating coil and the steel rail, the controller controls the heating state according to the magnitude of the output current and the distance between the induction heating coil and the steel rail, thereby preventing damage to the system due to the excessive current, and also preventing heat and power consumption from being wasted due to a longer distance between the induction heating coil and the steel rail, thus improving the reliability and safety of the system, and further reducing the power consumption of the system.

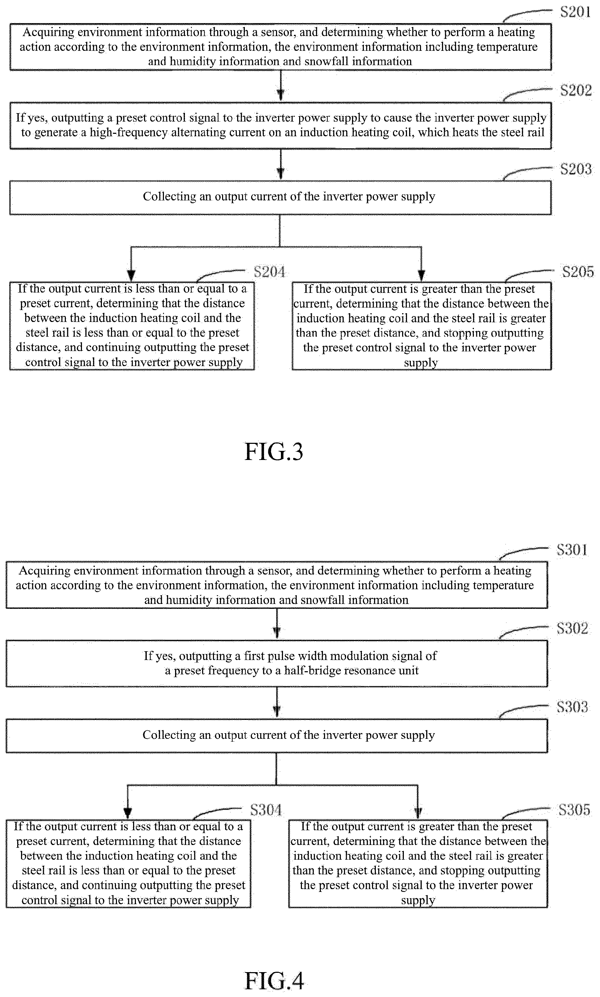

FIG. 3 is a flowchart of another control method of a snow melting system for railroad switches provided according to an embodiment of the present invention. Optionally, referring to FIG. 3, the control method comprises:

S201, acquiring environment information through a sensor, determining whether to perform a heating action according to the environment information, the environment information including temperature and humidity information and snowfall information;
S202, if yes, outputting a preset control signal to the inverter power supply to cause the inverter power supply to generate a high-frequency alternating current on the induction heating coil, which heats the steel rail;
S203, collecting an output current of the inverter power supply;
specifically, wherein the controller collects the high-frequency alternating current output from the inverter power supply to the induction heating coil, and
S204, if the output current is less than or equal to a preset current, determining that the distance between the induction heating coil and the steel rail is less than or equal to the preset distance, and continuing outputting the preset control signal to the inverter power supply.

In particular, when the induction heating coil is in close proximity to the steel rail, the resistance increases significantly, the output current is small at this time, and the system can operate stably. However, when the coil is farther from the steel rail, the resistance decreases, the output current is large, and if the operation is continued, not only power is wasted, but also it is more likely to cause damage to critical components. When the output current is less than or equal to the preset current, it is determined that the distance between the induction heating coil and the steel rail is less than or equal to the preset distance. The system can operate stably, continuing outputting the preset control signal to the inverter power supply for heating.

S205, if the output current is greater than the preset current, it is determined that the distance between the induction heating coil and the steel rail is greater than the preset distance, outputting the preset control signal to the inverter power supply is stopped.

Specifically, when the output current is greater than the preset current, it is determined that the distance between the induction heating coil and the steel rail is greater than the preset distance. Since the excessive output current easily causes damage to the device, and the distance between the induction heating coil and the steel rail greater than the preset distance causes waste of energy consumption and the heating efficiency decreases, it is necessary to stop outputting the preset control signal to the inverter power supply to stop heating.

According to the solution of the present embodiment, by judging the distance between the induction heating coil and the steel rail through collecting the output current of the inverter power supply, the controller controls the heating state according to the magnitude of the output current and the distance between the induction heating coil and the steel rail, thereby preventing the system from being damaged due to the excessive current, and wasting the power consumption due to a longer distance between the induction heating coil and the steel rail, thus improving the reliability and safety of the system, and further reducing the power consumption of the system.

FIG. 4 is a flowchart of yet another control method of a snow melting system for railroad switches provided according to an embodiment of the present invention. Optionally, the inverter power supply comprises a half-bridge resonance unit. Referring to FIG. 4, the control method comprises:

S301, acquiring environment information through a sensor, and determining whether to perform a heating action according to the environment information, the environment information including temperature and humidity information and snowfall information;
S302, if yes, outputting a first pulse width modulation signal of a preset frequency to the half-bridge resonance unit;
wherein in particular, the frequency of the first pulse width modulation signal may be set according to the heating needs, the magnitude of the output power of the half-bridge resonance unit may be controlled by varying the frequency of the first pulse width modulation signal, and exemplarily the frequency of the first pulse width modulation signal may be set to 23 kHz if the system is required to operate with 500 W power;
S303, collecting an output current of the inverter power supply;
S304, if the output current is less than or equal to a preset current, determining that the distance between the induction heating coil and the steel rail is less than or equal to the preset distance, and continuing outputting the preset control signal to the inverter power supply; and
S305, if the output current is greater than the preset current, determining that the distance between the induction heating coil and the steel rail is greater than the preset distance, and stopping outputting the preset control signal to the inverter power supply.

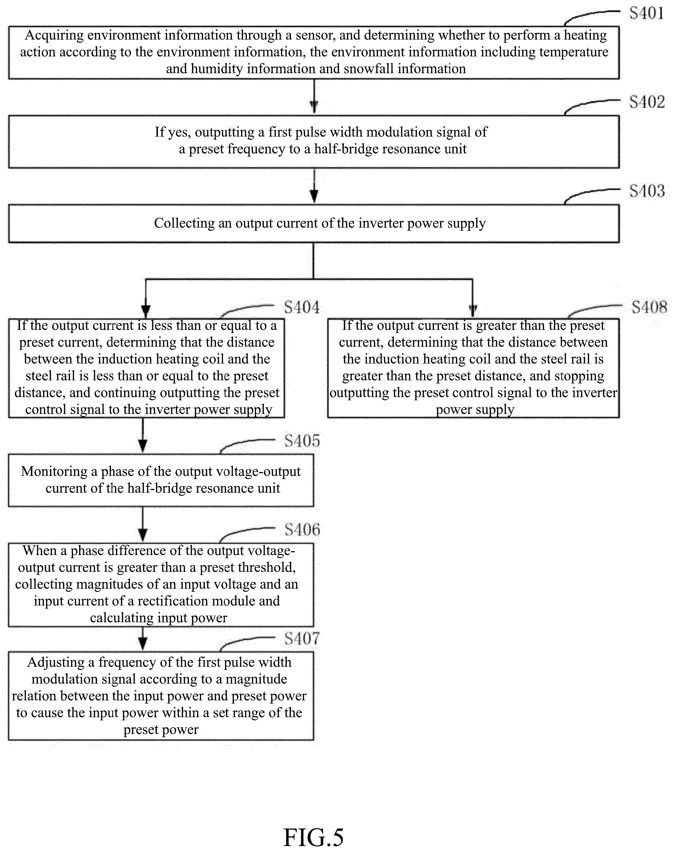

FIG. 5 is a flowchart of yet another control method for a snow melting system for railroad switches provided according to an embodiment of the present invention. Optionally, the snow melting system for railroad switches further comprises a rectification module. Referring to FIG. 5, the control method comprises:

S401, acquiring environment information through a sensor, and determining whether to perform a heating action according to the environment information, the environment information including temperature and humidity information and snowfall information;
S402, if yes, outputting a first pulse width modulation signal of a preset frequency to the half-bridge resonance unit;
S403, collecting an output current of the inverter power supply;
S404, if the output current is less than or equal to a preset current, determining that the distance between the induction heating coil and the steel rail is less than or equal to a preset distance, and continuing outputting the preset control signal to the inverter power supply; and
S405, monitoring a phase of an output voltage-output current of the half-bridge resonance unit.

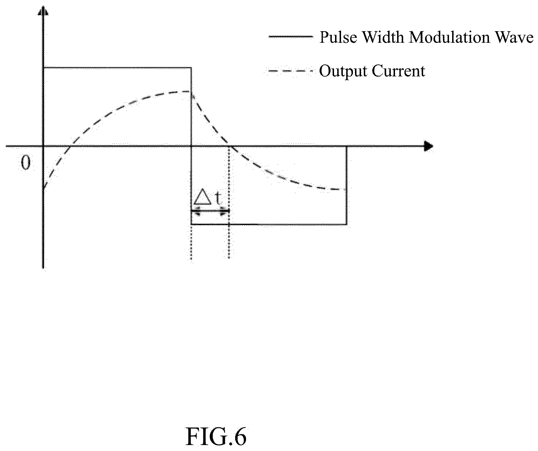

Specifically, the half-bridge resonance unit operates in an inductive state when the frequency of operation of the half-bridge resonance unit is higher than its resonance frequency. However, when the resonance frequency changes due to increasing the output power by decreasing the frequency, or the external environment changes affecting the impedance of the induction heating coil, the half-bridge resonance unit may operate in a capacitive state, in which the peak current generated when the diode in the half-bridge resonance unit reverses recovery is extremely likely to burn other devices, so the phase of the output voltage-output current needs to be monitored. The phase difference of the output voltage-output current is adjusted by changing the frequency of the first pulse width modulation signal.
S406, when the phase difference of the output voltage-output current is greater than a preset threshold, magnitudes of the input voltage and the input current of the rectification module are collected and the input power is calculated.
Specifically, since there is a time delay between a time at which the controller outputs the first pulse width modulation signal to the half-bridge resonance unit and a time at which the half-bridge resonance unit outputs the voltage signal and the time delay remains almost constant during operation of the system, the time delay can be measured during commissioning. The phase difference of the output voltage-output current can be calculated by monitoring the phase relation between the first pulse width modulation signal and the output current of the half-bridge resonance unit. FIG. 6 is a waveform diagram of the first pulse width modulation signal and the output current of the half-bridge resonance unit. Referring to FIG. 6, the controller starts a timer at the falling edge of the first pulse width modulation signal and reads a value of a counter when a zero-crossing of the output current is collected. According to the formula:

$$\theta = \frac{\Delta t - \tau}{T} \times 360°$$

the phase difference of the output voltage-output current can be calculated; where $\theta$ is the phase difference of the output voltage-output current, $\Delta t$ is the value of the counter at the zero crossing of the output current, $\tau$ is the time delay, and T is the period of the first pulse width modulation signal.
The preset threshold of the phase difference of the output voltage-output current may be set according to the operating condition of the half-bridge resonance unit. Exemplarily, the preset threshold is typically set to 15°. When the phase difference of the output voltage-output current is greater than the preset threshold, which indicates that the half-bridge resonance unit operates in the inductive state at this time, the system can operate stably, and the controller collects the magnitudes of the input voltage and the input current of the rectification module and calculates the input power. If the phase difference of the output voltage-output current is less than or equal to a preset threshold, the controller increases the frequency of the first pulse width modulation signal to increase the phase difference of the output voltage-output current.

S407, the frequency of the first pulse width modulation signal is adjusted according to a magnitude relation between the input power and the preset power to cause the input power within a set range of the preset power.

In particular, the preset power, i.e. the power at which the system operates, may be set according to the heating needs. Exemplarily, the preset power may be 500W. The controller adjusts the frequency of the first pulse width modulation signal according to the magnitude relation between the input power and the preset power so that the input power is within the set range of the preset power, ensuring the stable operation of the system.

S408, if the output current is greater than the preset current, it is determined that the distance between the induction heating coil and the steel rail is greater than the preset distance, and outputting the preset control signal to the inverter power supply is stopped.

The technical solution of the present embodiment, by monitoring the phase of the output voltage-output current of the half-bridge resonance unit, adjusts the frequency of the first pulse width modulation signal according to the magnitude between the phase difference of the output voltage-output current and the preset threshold to adjust the phase difference of the output voltage-output current, so that the half-bridge resonance unit is always operated in the inductive state, thereby ensuring the stability and reliability of the operation of the system.

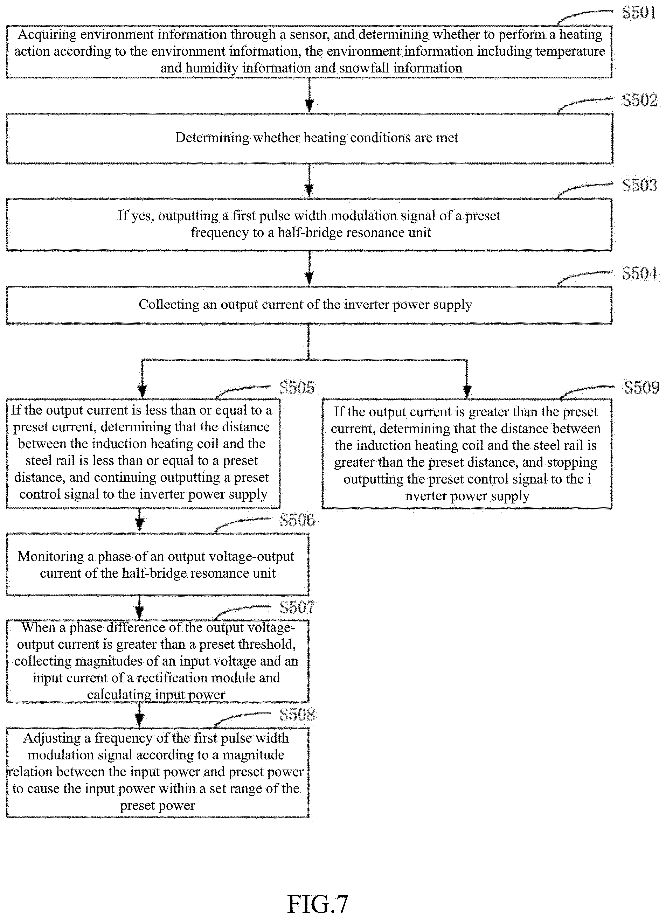

FIG. 7 is a flowchart illustrating yet another control method for a snow melting system for railroad switches provided according to an embodiment of the present invention. Optionally, the half-bridge resonance unit comprises an insulated gate bipolar transistor and a thermistor. Referring to FIG. 7, the control method comprises:

S501, acquiring environment information through a sensor, and determining whether to perform a heating action according to the environment information, the environment information including temperature and humidity information and snowfall information;
S502, judging whether heating conditions are met, wherein, specifically, the heating conditions include that the input voltage of the rectification module is normal, the temperature of the insulated gate bipolar transistor is normal, the distance between the induction heating coil and the steel rail is less than a preset distance, and the snow melting system for railroad switches is not in a heating state. When the heating action needs to be performed is determined according to the environment information, it is judged whether the heating conditions are met. If so, the heating action is continued to be performed, i.e., S503 is performed, and if not, the step of judging whether the heating conditions are met is returned.
S503, a first pulse width modulation signal of a preset frequency is output to the half-bridge resonance unit.
S504, an output current of the inverter power supply is collected.
S505, if the output current is less than or equal to a preset current, the distance between the induction heating coil and the steel rail is less than or equal to the preset distance is determined, and outputting the preset control signal to the inverter power supply is continued.
S506, the phase of the output voltage-output current of the half-bridge resonance unit is monitored.
S507, when the phase difference of the output voltage-output current is greater than the preset threshold, magnitudes of the input voltage and the input current of the rectification module are collected and the input power is calculated.
S508, a frequency of the first pulse width modulation signal is adjusted according to a magnitude relation between the input power and the preset power to cause the input power within a set range of the preset power.
S509, if the output current is greater than the preset current, the distance between the induction heating coil and the steel rail is greater than the preset distance is determined, and outputting the preset control signal to the inverter power supply is stopped.

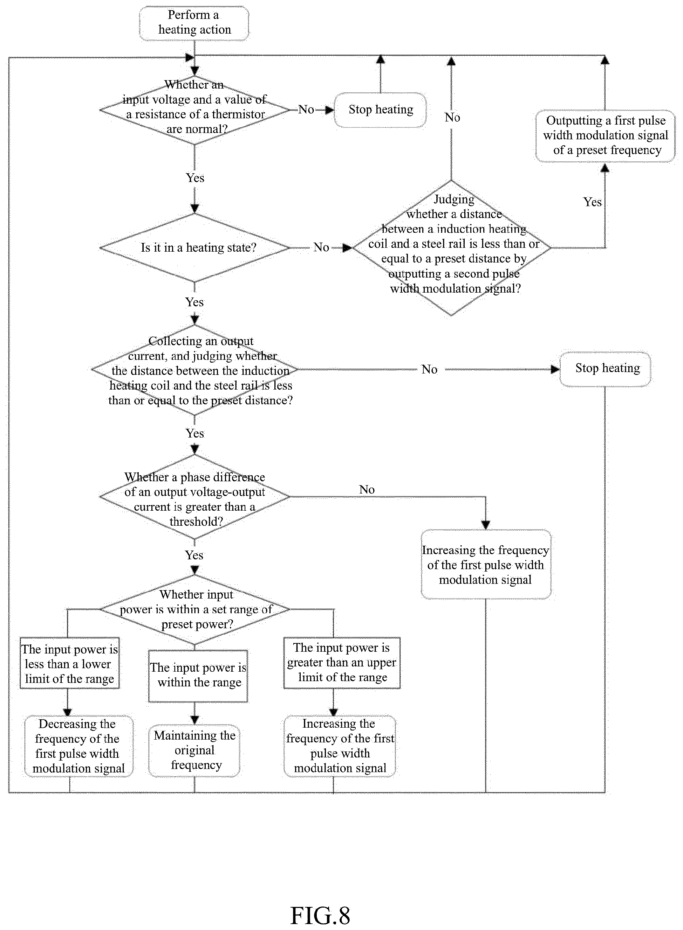

FIG. 8 is a logic diagram illustrating a control method for a snow melting system for railroad switches provided according to an embodiment of the present invention. Optionally, referring to FIG. 8, the control method comprises:

after the controller determines to perform the heating action, the controller first judges whether the input voltage of the rectification module and a value of a resistance of a thermistor in the half-bridge resonance unit are normal or not, and if abnormal, the heating is stopped, and the step of judging whether the input voltage of the rectification module and the value of the resistance of the thermistor in the half-bridge resonance unit are normal or not is returned. If normal, it is judged whether the snow melting system for railroad switches is in a heating state. If no, it is judged whether the distance between the induction heating coil and the steel rail is less than or equal to the preset distance by outputting a second pulse width modulation signal to the half-bridge resonance unit; and if yes, the step of outputting a first pulse width modulation signal of a preset frequency to the half-bridge resonance unit is performed, and the step of judging whether the input voltage of the rectification module and the value of the resistance of the thermistor in the half-bridge resonance unit are normal or not is returned. If the distance between the induction heating coil and the steel rail is greater than the preset distance, outputting the first pulse width modulation signal of the preset frequency is stopped, and the step of judging whether the input voltage of the rectification module and the value of the resistance of the thermistor in the half-bridge resonance unit are normal or not is returned. If the snow melting system for railroad switches is in the heating state, the step of collecting the output current of the inverter power supply is performed, and whether the distance between the induction heating coil and the steel rail is less than or equal to a preset distance is judged. If not, the heating is stopped, and the step of judging whether the input voltage of the rectification module and the value of the resistance of the thermistor in the half-bridge resonance unit are normal or not are returned. If yes, the phase of the output voltage-output current of the half-bridge resonance unit is monitored, whether the phase difference of the output voltage-output current of the half-bridge resonance unit is greater than a preset threshold is judged. If no, the frequency of the first pulse width modulation signal is increased; and if yes, the input power is calculated according to the magnitudes of the input voltage and the input current of the rectification module, and whether the input power is within the set range of the preset power is judged. Specifically, the frequency of the first pulse width modulation signal is inversely proportional to the input power. The lower the frequency of the first pulse width modulation signal, the higher the input power. The magnitude of the input power is controlled by adjusting the frequency of the first pulse width modulation signal, to cause the input power to be always stabilized within the set range of the preset power, thereby ensuring stable operation of the system. If the input power is less than the lower limit of the set range of the preset power, the frequency of the first pulse width modulation signal is decreased, and the step of judging whether the input voltage of the rectification module and the value of the resistance of the thermistor in the half-bridge resonance unit are normal or not is returned. If the input power is within the set range of the preset power, the frequency of the first pulse width modulation signal is not adjusted, and the step of judging whether the input voltage of the rectification module and the value of the resistance of the thermistor in the half-bridge resonance unit are normal or not is returned. If the input power is larger than the upper limit of the set range of the preset power, the frequency of the first pulse width modulation signal is increased, and the step of judging whether the input voltage of the rectification module and the value of the resistance of the thermistor in the half-bridge resonance unit are normal or not is returned.

The steps of judging whether the input voltage of the rectification module and the value of the resistance of the thermistor in the half-bridge resonance unit are normal or not, judging whether the snow melting system for railroad switches is in the heating state, and judging whether the distance between the induction heating coil and the steel rail is less than or equal to the preset distance are the step of judging whether the heating conditions are met.

Specifically, the thermistor in the half-bridge resonance unit is disposed near the insulated gate bipolar transistor, for detecting the temperature of the insulated gate bipolar transistor, and judging whether the temperature of the insulated gate bipolar transistor is too high or not according to the value of the resistance of the thermistor. The controller collects the input voltage of the rectification module, measures the value of the resistance of the thermistor in the half-bridge resonance unit, judges whether the input voltage is within a preset range of a voltage, and judges whether the value of the resistance of the thermistor is within a preset range of the value of the resistance. If it is abnormal, which indicates the fluctuation of the input voltage is large, or the temperature of the insulated gate bipolar transistor is too high, continuing performing the heating action is likely to cause failures such as a surge of the input voltage, burnout of the critical device and the like, and thus performing the heating action is stopped at this time, and whether the heating conditions are met is reconfirmed.

If the input voltage of the rectification module and the value of the resistance of the thermistor in the half-bridge resonance unit are both normal, whether the snow melting system for railroad switches is in the heating state is judged. If not, a second pulse width modulation signal is output to the half-bridge resonance unit, and the magnitude of the output current of the half-bridge resonance unit at this time is detected, wherein the second pulse width modulation signal is a short pulse wave of a high frequency, which may exemplarily be a pulse wave of 40 kHz. Whether the distance between the induction heating coil and the steel rail is less than or equal to the preset distance is judged according to the magnitude of the output current. If the output current is smaller, indicating that the distance between the induction heating coil and the steel rail is less than or equal to the preset distance, performing the step of outputting the first pulse width modulation signal of the preset frequency to the half-bridge resonance unit is continued, and whether the heating conditions are met is reconfirmed. If the output current is large, indicating the distance between the induction heating coil and the steel rail is larger than the preset distance, not only electric power is wasted, but also damage to critical devices is more likely to occur if the heating action is continued at this time. Thus, performing the step of outputting the first pulse width modulation signal of the preset frequency to the half-bridge resonance unit is stopped, and whether the heating conditions are met or not is reconfirmed.

If the snow melting system for railroad switches is already in the heating state, it is indicated that parameters for judging are normal when judging whether the heating conditions are met or not, the step of collecting the output current of the inverter power supply can be continued, and the subsequent adjustment and control of the heating action can be carried out.

In the technical solution of the embodiment, environment information is acquired through a sensor, whether a steel rail needs heating for melting snow is judged in combination with the environment information, when determining that the rail needs heating for melting snow, whether the system meets the heating conditions is judged, when the heating conditions are determined to be met, a controller outputs a preset control signal to an inverter power supply to cause the inverter power supply to generate a corresponding high-frequency alternating current according to a pulse wave signal of a preset frequency, and output the corresponding high-frequency alternating current to an induction heating coil to cause the induction heating coil to generate an alternating magnetic field, and the steel rail is heated by eddy current generated on the steel rail utilizing the alternating magnetic field, which has the advantages of high heating efficiency, rapid temperature increase, and low power consumption, and improves the reliability and safety of the system, and further reduce the power consumption of the system by controlling the heating state through judging whether the system meets the heating conditions.

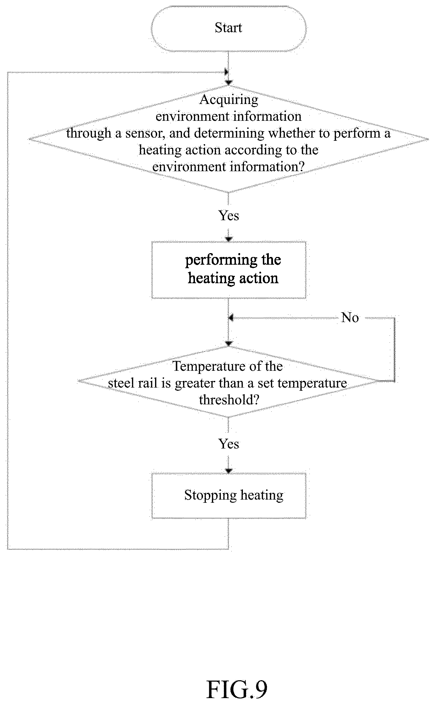

FIG. 9 is a logic diagram of yet another control method of a snow melting system for railroad switches provided according to an embodiment of the present invention. Optionally, referring to FIG. 9, the control method comprises:

after the snow melting system for railroad switches starts to operate, the controller first acquires environment information through a sensor, and determines whether to perform a heating action according to the environment information. If so, the step of performing the heating action as shown in FIG. 8 is performed. After starting to perform the heating action, the controller acquires the temperature of the steel rail through a sensor, and judges whether the temperature of the steel rail is greater than a set temperature threshold. If so, the heating is stopped, and if not, performing the heating action is continued.

Exemplarily, the controller collects the environment information from the sensor and determines to perform the heating action if the sensor identifies snowfall, or the temperature of the steel rail is below 0 °C and the humidity of the steel rail is above a preset humidity threshold. The controller outputs a preset control signal to the inverter power supply to cause the inverter power supply to generate a high-frequency alternating current on the induction heating coil, which heats the steel rail. A magnitude relation between a distance between the induction heating coil and the steel rail and a preset distance is determined according to the collected output current of the inverter power supply during the continuous heating, and an output signal to the inverter power supply is controlled according to the magnitude relation to control a heating state, wherein the heating state includes continuing heating and stopping heating. The temperature of the steel rail is acquired through a sensor, and when the temperature of the steel rail is greater than the set temperature threshold, the heating action is stopped. Exemplarily, when the temperature of the steel rail collected by the controller through the sensor is greater than the set temperature threshold, indicating that the temperature of the steel rail is already possible to achieve snow melting at this time, and that no continuing heating is required, the controller stops performing the heating action and enters a standby state at this time, thereby achieving automatic control of system heating, and reducing the system energy consumption. The set temperature threshold may be 30°.

The embodiment of the present invention further provides a snow melting system for railroad switches. FIG. 2 is a structural schematic diagram of a snow melting system for railroad switches according to an embodiment of the present invention. Referring to FIG. 2, the system comprises: a controller 1, an inverter power supply 2, an induction heating coil 3 and a sensor 4.

The controller 1 is connected with the inverter power supply 2 and is configured to output a preset control signal to the inverter power supply 2, to determine a magnitude relation between a distance between the induction heating coil 3 and the steel rail and a preset distance according to a collected output current of the inverter power supply 2, and to control an output signal to the inverter power supply 2 according to the magnitude relation to control a heating state of the induction heating coil 3.

The inverter power supply 2 is connected with the induction heating coil 3, and is configured to generate a high-frequency alternating current on the induction heating coil 3 according to the preset control signal output from the controller 1, to cause the induction heating coil 3 to heat the steel rail.

The induction heating coil 3 is disposed on the steel rail and is configured to heat the steel rail according to an output current provided by the inverter power supply 2.

The sensor 4 is configured to collect environment information and transmit it to the controller 1.

Specifically, the controller 1 is configured to collect the environment information acquired through the sensor 4, and to control the heating state of the snow melting system for railroad switches in combination with the environment information. The controller 1 outputs a preset control signal to the inverter power supply 2. The inverter power supply 2 generates a corresponding high-frequency alternating current according to the preset control signal output from the controller 1 and outputs the corresponding high-frequency alternating current to the induction heating coil 3. The induction heating coil 3 generates an alternating magnetic field according to the high-frequency alternating current. The steel rail is heated by eddy current generated utilizing the alternating magnetic field. This improves the heating efficiency of the system, and reduces the energy consumption of the system. During the continuous heating process, the controller 1 determines the magnitude relation between the distance of the induction heating coil 3 and the steel rail and the preset distance according to the collected output current of the inverter power supply 2, and controls the heating state according to the magnitude relation. When the output current is large and the distance between the induction heating coil 3 and the steel rail is larger than the preset distance, the heating action is stopped, so that the stability, reliability and safety of the system are ensured.

In the technical solution of the embodiment, environment information is acquired through a sensor, whether a steel rail needs heating for melting snow is judged in combination with the environment information, when determining that the rail needs heating for melting snow, a controller outputs a preset control signal to an inverter power supply to cause the inverter power supply to generate a corresponding high-frequency alternating current according to a pulse wave signal of a preset frequency, and output the corresponding high-frequency alternating current to an induction heating coil to cause the induction heating coil to generate an alternating magnetic field, and the steel rail is heated by eddy current generated on the steel rail utilizing the alternating magnetic field, which does not require heat conduction and self-heating of the steel rail, has the advantages of high heating efficiency, rapid temperature increase, and low power consumption, and further reduces the power consumption of the system by automatic control in connection with the environment information.

Continuing to refer to FIG. 2, optionally, the inverter power supply 2 comprises a half-bridge resonance unit 21 configured to generate the high-frequency alternating current on the induction heating coil 3 according to a first pulse width modulation signal of a preset frequency output from the controller 1.

The half-bridge resonance unit 21 comprises: an insulated gate bipolar transistor 201 and a thermistor 202.

The insulated gate bipolar transistor 201 is configured to control the on and off of the half-bridge resonance unit 21 according to the first pulse width modulation signal of the preset frequency output from the controller 1.

The thermistor 202 is configured to monitor the temperature of the insulated gate bipolar transistor 201.

Specifically, the half-bridge resonance unit 21 is configured to convert a direct current into a high-frequency alternating current of 20kHz ~ 40kHz which is output to the induction heating coil 3 according to the first pulse width modulation signal of the preset frequency output from the controller 1. The half-bridge resonance unit 21 comprises the insulated gate bipolar transistor 201 and the thermistor 202. When the insulated gate bipolar transistor 201 receives the pulse width modulation signal output from the controller 1, the half-bridge resonance unit 21 is controlled to be on, i.e., performing a heating action. When the controller 1 stops outputting the pulse width modulation signal, the insulated gate bipolar transistor 201 controls the half-bridge resonance unit 21 to be off, i.e. stops performing the heating action. The thermistor 202 is disposed in the vicinity of the insulated gate bipolar transistor 201. The value of the resistance of the thermistor 202 varies according to the temperature change of the insulated gate bipolar transistor 201. The thermistor 202 is configured to monitor the temperature of the insulated gate bipolar transistor 201. The controller 1 controls the heating state according to the value of the resistance of the thermistor 202 to prevent the temperature of the insulated gate bipolar transistor 201 from being too high to burn out.

Continuing to refer to FIG. 2, optionally, the system further comprises an isolation transformer 5, and a rectification module 6.

The isolation transformer 5 is configured to power the rectification module 6.

The rectification module 6 is configured to rectify the alternating current provided by the isolation transformer 5 into the direct current.

In particular, the isolation transformer 5 may be disposed beside the rail and connected with the rectification module 6 for powering the entire system through the rectification module 6. The rectification module 6 is configured to rectify the alternating current provided by the isolation transformer 5 into the direct current which is input to the half-bridge resonance unit 21, which converts the direct current into high frequency alternating current which is output to the induction heating coil 3 to heat the steel rail, according to the first pulse width modulation signal of the preset frequency output from the controller 1.

It should be understood that various forms of the flow shown above may be used, with steps reordered, added, or deleted. For example, each step described in the present invention may be performed in parallel, may be performed sequentially, or may be performed in a different order, which is not limited herein as long as the desired result of the technical solution of the present invention can be achieved.

The above detailed description is not to be construed as limiting the scope of the present invention. It should be apparent to those skilled in the art that various modifications, combinations, sub-combinations, and substitutions may occur depending on design requirements and other factors. It is intended that all such modifications, equivalents, and improvements be included within the spirit and principles of the present invention as fall within the scope of the present invention.

This Application claims the benefit of and priority to Chinese Patent Application No. 202310627602.9, filed May 31, 2023, the entire contents of which are hereby incorporated by reference as a part of the application.

**Claims**

1. A control method for a snow melting system for railroad switches, comprising:

acquiring environment information through a sensor, determining whether to perform a heating action according to the environment information, wherein the environment information includes temperature and humidity information and snowfall information;

if determining to perform the heating action, outputting a preset control signal to an inverter power supply, to cause the inverter power supply to generate a high-frequency alternating current on an induction heating coil which heats a steel rail;

determining a magnitude relation between a distance between the induction heating coil and the steel rail and a preset distance according to a collected output current of the inverter power supply, and controlling an output signal to the inverter power supply according to the magnitude relation to control a heating state; wherein the heating state include continuing heating and stopping heating.

2. The control method of the claim 1, **characterized in that** the determining the magnitude relation between the distance between the induction heating coil and the steel rail and the preset distance according to the collected output current of the inverter power supply, and controlling the output signal to the inverter power supply according to the magnitude relation to control the heating state comprises:

collecting an output current of the inverter power supply;

if the output current is less than or equal to a preset current, determining that the distance between the induction heating coil and the steel rail is less than or equal to the preset distance, and continuing outputting the preset control signal to the inverter power supply; and

if the output current is greater than the preset current, determining that the distance between the induction heating coil and the steel rail is greater than the preset distance, and stopping outputting the preset control signal to the inverter power supply.

3. The control method of the claim 2, **characterized in that** the inverter power supply comprises a half-bridge resonance unit, and the outputting the preset control signal to the inverter power supply to cause the inverter power supply to generate the high-frequency alternating current on the induction heating coil which heats the steel rail comprises:
outputting a first pulse width modulation signal of a preset frequency to the half-bridge resonance unit.

4. The control method of the claim 3, **characterized in that** the snow melting system for railroad switches further comprises a rectification module, after determining that the distance between the induction heating coil and the steel rail is less than or equal to the preset distance if the output current is less than or equal to the preset current, continuing outputting the preset control signal to the inverter power supply, the method further comprising:

monitoring a phase of an output voltage-output current of the half-bridge resonance unit;

collecting magnitudes of an input voltage and an input current of the rectification module and calculating input power when a phase difference of the output voltage-output current is greater than a preset threshold; and

adjusting a frequency of the first pulse width modulation signal according to a magnitude relation between the input power and preset power to cause the input power within a set range of the preset power.

5. The control method of the claim 4, **characterized in that** the half-bridge resonance unit comprises an insulated gate bipolar transistor and a thermistor; before outputting the first pulse width modulation signal of the preset frequency to the half-bridge resonance unit, the method further comprising:

judging whether heating conditions are met, and continuing performing the step of outputting the first pulse width modulation signal of the preset frequency to the half-bridge resonance unit if the heating conditions are met,

wherein the heating conditions comprise an input voltage of the rectification module is normal, a temperature of the insulated gate bipolar transistor is normal, the distance between the induction heating coil and the steel rail is less than the preset distance, and the snow melting system for railroad switches is not in the heating state.

6. The control method of the claim 5, **characterized in that** the judging whether the heating conditions are met comprises:

acquiring the input voltage of the rectification module,

measuring a value of a resistance of the thermistor in the half-bridge resonance unit,

judging whether the input voltage is within a preset range of a voltage,

judging whether the value of the resistance of the thermistor is within a preset range of the value of the resistance,

stopping outputting the first pulse width modulation signal of the preset frequency and returning to perform the step of collecting the input voltage of the rectification module if abnormal;
judging whether the snow melting system for railroad switches is in the heating state if normal, if the snow melting system for railroad switches is not in the heating state,

outputting a second pulse width modulation signal to the half-bridge resonance unit, detecting a magnitude of the output current of the half-bridge resonance unit at this time,
judging whether the distance of the induction heating coil and the steel rail is less than or equal to the preset distance according to the magnitude of the output current,
if the distance between the induction heating coil and the steel rail is less than or equal to the preset distance,

continuing performing the step of outputting the first pulse width modulation signal of the preset frequency to the half-bridge resonance unit, and returning to perform the step of collecting the input voltage of the rectification module;

if the distance between the induction heating coil and the steel rail is greater than the preset distance,

stopping outputting the first pulse width modulation signal of the preset frequency, and returning to perform the step of collecting the input voltage of the rectification module; and

if the snow melting system for railroad switches is in the heating state, continuing performing the step of collecting the output current of the inverter power supply.

7. The control method of the claim 4, **characterized in that** the adjusting the frequency of the first pulse width modulation signal according to the magnitude relation between the input power and the preset power to cause the input power within the set range of the preset power comprises:

decreasing the frequency of the first pulse width modulation signal if the input power is less than a lower limit of the set range of the preset power;
not adjusting the frequency of the first pulse width modulation signal if the input power is within the set range of the preset power; and
increasing the frequency of the first pulse width modulation signal if the input power is greater than an upper limit of the set range of the preset power.

8. The control method of the claim 1, **characterized in that** after determining the magnitude relation between the distance between the induction heating coil and the steel rail and the preset distance according to the collected output current of the inverter power supply, and controlling the output signal to the inverter power supply according to the magnitude relation to control the heating state, the method further comprises:

acquiring a temperature of the steel rail through the sensor, and
stopping performing the heating action when the temperature of the steel rail is greater than a set temperature threshold.

9. A snow melting system for railroad switches, comprising: a controller, an inverter power supply, an induction heating coil, and a sensor; the controller connected with the inverter power supply and configured to:

output a preset control signal to the inverter power supply,
determine a magnitude relation between a distance between the induction heating coil and the steel rail and a preset distance according to a collected output current of the inverter power supply, and
control an output signal to the inverter power supply according to the magnitude relation to control a heating state of the induction heating coil;
the inverter power supply connected with the induction heating coil, and configured to generate a high-frequency alternating current on the induction heating coil according to the preset control signal output from the controller, to cause the induction heating coil to heat the steel rail;
the induction heating coil disposed on the steel rail and configured to heat the steel rail according to an output current provided by the inverter power supply; and
the sensor configured to collect environment information and transmit the environment information to the controller.

10. The snow melting system for railroad switches of the claim 9, **characterized in that** the inverter power supply comprises a half-bridge resonance unit, the half-bridge resonance unit configured to generate the high-frequency alternating current on the induction heating coil according to a first pulse width modulation signal of a preset frequency output from the controller; and

the half-bridge resonance unit comprises: an insulated gate bipolar transistor and a thermistor; wherein the insulated gate bipolar transistor is configured to control on and off of the half-bridge resonance unit according to the first pulse width modulation signal of the preset frequency output from the controller; and wherein the thermistor is configured to monitor the temperature of the insulated gate bipolar transistor.

11. The snow melting system for railroad switches of the claim 9, **characterized in that** the system further comprises an isolation transformer and a rectification module;

    wherein the isolation transformer is configured to power the rectification module; and
wherein the rectification module is configured to rectify an alternating current provided by the isolation transformer into a direct current.

S101

Acquiring environment information through a sensor, and determining whether to perform a heating action according to the environment information, the environment information including temperature and humidity information and snowfall information

S102

If yes, outputting a preset control signal to an inverter power supply to cause the inverter power supply to generate a high-frequency alternating current on an induction heating coil, which heats a steel rail

S103

Determining a magnitude relation between a distance between the induction heating coil and the steel rail and a preset distance according to a collected output current of the inverter power supply, and controlling an output signal to the inverter power supply according to the magnitude relation to control a heating state, wherein the heating state includes continuing heating and stopping heating

FIG.1

FIG.2

S201

Acquiring environment information through a sensor, and determining whether to perform a heating action according to the environment information, the environment information including temperature and humidity information and snowfall information

S202

If yes, outputting a preset control signal to the inverter power supply to cause the inverter power supply to generate a high-frequency alternating current on an induction heating coil, which heats the steel rail

S203

Collecting an output current of the inverter power supply

S204

If the output current is less than or equal to a preset current, determining that the distance between the induction heating coil and the steel rail is less than or equal to the preset distance, and continuing outputting the preset control signal to the inverter power supply

S205

If the output current is greater than the preset current, determining that the distance between the induction heating coil and the steel rail is greater than the preset distance, and stopping outputting the preset control signal to the inverter power supply

FIG.3

S301

Acquiring environment information through a sensor, and determining whether to perform a heating action according to the environment information, the environment information including temperature and humidity information and snowfall information

S302

If yes, outputting a first pulse width modulation signal of a preset frequency to a half-bridge resonance unit

S303

Collecting an output current of the inverter power supply

S304

If the output current is less than or equal to a preset current, determining that the distance between the induction heating coil and the steel rail is less than or equal to the preset distance, and continuing outputting the preset control signal to the inverter power supply

S305

If the output current is greater than the preset current, determining that the distance between the induction heating coil and the steel rail is greater than the preset distance, and stopping outputting the preset control signal to the inverter power supply

FIG.4

S401

Acquiring environment information through a sensor, and determining whether to perform a heating action according to the environment information, the environment information including temperature and humidity information and snowfall information

S402

If yes, outputting a first pulse width modulation signal of a preset frequency to a half-bridge resonance unit

S403

Collecting an output current of the inverter power supply

S404

If the output current is less than or equal to a preset current, determining that the distance between the induction heating coil and the steel rail is less than or equal to the preset distance, and continuing outputting the preset control signal to the inverter power supply

S408

If the output current is greater than the preset current, determining that the distance between the induction heating coil and the steel rail is greater than the preset distance, and stopping outputting the preset control signal to the inverter power supply

S405

Monitoring a phase of the output voltage-output current of the half-bridge resonance unit

S406

When a phase difference of the output voltage-output current is greater than a preset threshold, collecting magnitudes of an input voltage and an input current of a rectification module and calculating input power

S407

Adjusting a frequency of the first pulse width modulation signal according to a magnitude relation between the input power and preset power to cause the input power within a set range of the preset power

# FIG.5

FIG.6

S501

Acquiring environment information through a sensor, and determining whether to perform a heating action according to the environment information, the environment information including temperature and humidity information and snowfall information

S502

Determining whether heating conditions are met

S503

If yes, outputting a first pulse width modulation signal of a preset frequency to a half-bridge resonance unit

S504

Collecting an output current of the inverter power supply

S505

If the output current is less than or equal to a preset current, determining that the distance between the induction heating coil and the steel rail is less than or equal to a preset distance, and continuing outputting a preset control signal to the inverter power supply

S509

If the output current is greater than the preset current, determining that the distance between the induction heating coil and the steel rail is greater than the preset distance, and stopping outputting the preset control signal to the i nverter power supply

S506

Monitoring a phase of an output voltage-output current of the half-bridge resonance unit

S507

When a phase difference of the output voltage-output current is greater than a preset threshold, collecting magnitudes of an input voltage and an input current of a rectification module and calculating input power

S508

Adjusting a frequency of the first pulse width modulation signal according to a magnitude relation between the input power and preset power to cause the input power within a set range of the preset power

FIG.7

Perform a heating action

Whether an input voltage and a value of a resistance of a thermistor are normal? —No→ Stop heating

Yes

Is it in a heating state? —No→ Judging whether a distance between a induction heating coil and a steel rail is less than or equal to a preset distance by outputting a second pulse width modulation signal?

No

Outputting a first pulse width modulation signal of a preset frequency

Yes

Yes

Collecting an output current, and judging whether the distance between the induction heating coil and the steel rail is less than or equal to the preset distance? —No→ Stop heating

Yes

Whether a phase difference of an output voltage-output current is greater than a threshold? —No→ Increasing the frequency of the first pulse width modulation signal

Yes

Whether input power is within a set range of preset power?

The input power is less than a lower limit of the range

The input power is within the range

The input power is greater than an upper limit of the range

Decreasing the frequency of the first pulse width modulation signal

Maintaining the original frequency

Increasing the frequency of the first pulse width modulation signal

FIG.8

21

Start

Acquiring
environment information
through a sensor, and determining whether to perform a
heating action according to the
environment information?

Yes

performing the
heating action

No

Temperature of the
steel rail is greater than a set temperature
threshold?

Yes

Stopping heating

FIG.9

| INTERNATIONAL SEARCH REPORT | International application No. |
|---|---|
| | **PCT/CN2023/124752** |

**A.    CLASSIFICATION OF SUBJECT MATTER**

G05D23/20(2006.01)i

According to International Patent Classification (IPC) or to both national classification and IPC

**B.    FIELDS SEARCHED**

Minimum documentation searched (classification system followed by classification symbols)

IPC:G05D23 H05B6 E01H8

Documentation searched other than minimum documentation to the extent that such documents are included in the fields searched

Electronic data base consulted during the international search (name of data base and, where practicable, search terms used)

CNABS, CNTXT, CNKI: 融雪, 钢轨, 电流, 加热, 线圈, 逆变, 电磁感应, 距离, 相位, 功率; VEN, USTXT, EPTXT, ELSEVIER: melt, snow, rail, current, heat, coil, inversion, electromagnetic induction, distance, phase, power

**C.    DOCUMENTS CONSIDERED TO BE RELEVANT**

| Category* | Citation of document, with indication, where appropriate, of the relevant passages | Relevant to claim No. |
|---|---|---|
| PX | CN 116382379 A (BEIJING NATIONAL RAILWAY RESEARCH & DESIGN INSTITUTE OF SIGNAL & COMMUNICATION LTD.) 04 July 2023 (2023-07-04) <br> claims 1-11 | 1-11 |
| Y | EP 3169138 A1 (IFF GMBH) 17 May 2017 (2017-05-17) <br> description, paragraphs 52-144, and figures 1-8 | 1-3, 8-11 |
| Y | JP 2004176451 A (MATSUSHITA ELECTRIC INDUSTRIAL CO., LTD.) 24 June 2004 (2004-06-24) <br> description, paragraphs 10-64, and figures 1-6 | 1-3, 8-11 |
| Y | JP 2002309536 A (MATSUSHITA ELECTRIC INDUSTRIAL CO., LTD.) 23 October 2002 (2002-10-23) <br> description, paragraphs 18-45, and figures 1-11 | 1-3, 8-11 |
| Y | CN 116136452 A (HYUNDAI MOTOR CO., LTD. et al.) 19 May 2023 (2023-05-19) <br> description, paragraphs 38-75, and figures 1-7 | 1-3, 8-11 |
| A | CN 204959542 U (KELESE (TIANJIN) ELECTRIC HEATING TECHNOLOGY CO., LTD.) 13 January 2016 (2016-01-13) <br> entire document | 1-11 |

☑ Further documents are listed in the continuation of Box C.          ☑ See patent family annex.

| | |
|---|---|
| *    Special categories of cited documents: <br> "A"    document defining the general state of the art which is not considered to be of particular relevance <br> "D"    document cited by the applicant in the international application <br> "E"    earlier application or patent but published on or after the international filing date <br> "L"    document which may throw doubts on priority claim(s) or which is cited to establish the publication date of another citation or other special reason (as specified) <br> "O"    document referring to an oral disclosure, use, exhibition or other means <br> "P"    document published prior to the international filing date but later than the priority date claimed | "T"    later document published after the international filing date or priority date and not in conflict with the application but cited to understand the principle or theory underlying the invention <br> "X"    document of particular relevance; the claimed invention cannot be considered novel or cannot be considered to involve an inventive step when the document is taken alone <br> "Y"    document of particular relevance; the claimed invention cannot be considered to involve an inventive step when the document is combined with one or more other such documents, such combination being obvious to a person skilled in the art <br> "&"    document member of the same patent family |

| Date of the actual completion of the international search | Date of mailing of the international search report |
|---|---|
| **26 January 2024** | **06 February 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/124752**

**C. DOCUMENTS CONSIDERED TO BE RELEVANT**

| Category* | Citation of document, with indication, where appropriate, of the relevant passages | Relevant to claim No. |
|---|---|---|
| A | JP 2005009102 A (MATSUSHITA ELECTRIC INDUSTRIAL CO., LTD.) 13 January 2005 (2005-01-13)<br>entire document | 1-11 |

Form PCT/ISA/210 (second sheet) (July 2022)

INTERNATIONAL SEARCH REPORT
Information on patent family members

International application No.

**PCT/CN2023/124752**

| Patent document cited in search report | | | Publication date (day/month/year) | Patent family member(s) | | | Publication date (day/month/year) |
|---|---|---|---|---|---|---|---|
| CN | 116382379 | A | 04 July 2023 | CN | 116382379 | B | 01 September 2023 |
| EP | 3169138 | A1 | 17 May 2017 | None | | | |
| JP | 2004176451 | A | 24 June 2004 | None | | | |
| JP | 2002309536 | A | 23 October 2002 | None | | | |
| CN | 116136452 | A | 19 May 2023 | US | 2023152173 | A1 | 18 May 2023 |
| | | | | KR | 20230072169 | A | 24 May 2023 |
| CN | 204959542 | U | 13 January 2016 | None | | | |
| JP | 2005009102 | A | 13 January 2005 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202310627602